Europäisches Patentamt

(19) European Patent Office

Office européen des brevets

(11) **EP 0 804 513 B1**

(12) **EUROPÄISCHE PATENTSCHRIFT**

(45) Veröffentlichungstag und Bekanntmachung des Hinweises auf die Patenterteilung:
**08.11.2000 Patentblatt 2000/45**

(21) Anmeldenummer: **96900526.3**

(22) Anmeldetag: **11.01.1996**

(51) Int Cl.[7]: **C09D 5/00**, C09D 5/32

(86) Internationale Anmeldenummer:
**PCT/DE96/00069**

(87) Internationale Veröffentlichungsnummer:
**WO 96/22337 (25.07.1996 Gazette 1996/34)**

(54) **ANSTRICHSTOFF MIT REFLEKTIERENDEN EIGENSCHAFTEN IN ZWEI WELLENLÄNGENBEREICHEN UND ABSORBIERENDEN EIGENSCHAFTEN IN EINEM DRITTEN WELLENLÄNGENBEREICH**

COATING MATERIAL WITH REFLECTIVE PROPERTIES IN TWO WAVELENGTH RANGES AND ABSORBENT PROPERTIES IN A THIRD WAVELENGTH RANGE

PEINTURE AYANT DES PROPRIETES REFLECHISSANTES DANS DEUX PLAGES DE LONGUEURS D'ONDE ET DES PROPRIETES ABSORBANTES DANS UNE TROISIEME PLAGE DE LONGUEURS D'ONDE

(84) Benannte Vertragsstaaten:
**AT BE CH DE DK ES FR GB IT LI NL SE**

(30) Priorität: **17.01.1995 DE 19501114**

(43) Veröffentlichungstag der Anmeldung:
**05.11.1997 Patentblatt 1997/45**

(73) Patentinhaber: **Hugo, Gerd**
**86938 Schondorf (DE)**

(72) Erfinder: **Hugo, Gerd**
**86938 Schondorf (DE)**

(74) Vertreter: **Frank, Veit Peter, Dipl.-Ing. et al**
**Hoffmann Eitle,**
**Patent- und Rechtsanwälte**
**Arabellastrasse 4**
**81925 München (DE)**

(56) Entgegenhaltungen:
**DE-A- 2 056 211        DE-A- 3 432 998**
**DE-A- 4 418 215        GB-A- 1 074 891**

**Beschreibung**

Bekannte Anstrichstoffe, wie z.B. Wandfarben für den Innenbereich eines Hauses, bestehen aus Bindemitteln, Pigmenten und verschiedenen Additiven. In den meisten Fällen werden weiße Wandfarben bevorzugt, um eine hohe Ausnutzung des Lichtes durch Reflexion an den Wänden zu haben.

Neben der Reflexion des Lichtes im Raum durch die hellen Wände, wäre es im Winter wünschenswert, die von den Gegenständen im Raum und von den Innenwänden des Hauses und von den Menschen im Raum ausgehende Wärmestrahlung an den Innenseiten der Außenwände in den Raum zurückzureflektieren. Bei einer Temperatur von 20° Celsius strahlt die Innenwand eines Hauses immerhin eine Wärmeenergie von

$$M = \varepsilon \cdot \sigma \cdot T^4 = 397\,Wm^{-2} \text{ ab.}$$

Dabei ist $\varepsilon$ der Emissionsgrad der Oberfläche, $\sigma$ die Stefan Boltzmann Konstante mit $5.67 \times 10^{-8}$ und T die Oberflächentemperatur in Kelvin. Die nach Wien's Gesetz dieser Temperatur zugeordnete Wellenlänge liegt bei 9.89 µm, eine Wellenlänge im thermischen Infrarot. Das heißt, die Wand strahlt mit einer Strahlungscharakteristik nach Plank, mit einem Strahlungsmaximum bei 9.89 µm ab. Diese Wärmestrahlung wird von der gegenüberliegenden Innenseite der Außenwand nur ca. zu 5% reflektiert, da die im Hausbereich eingesetzten Anstrichstoffe im Wellenlängenbereich der Wärmestrahlung von 5 bis 100 µm stark absorbieren. Die restlichen 95% werden über Wärmeleitung der Wand nach außen transportiert und gehen dem Raum verloren.

Scheint im Winter die Sonne, so kann die solare Strahlung wegen des tiefen Sonnenstandes in dieser Jahreszeit z.B. durch ein Südfenster des Hauses auf eine Innenwand treffen und entsprechend den Reflexionseigenschaften der Wandfarbe im Spektralbereich der Sonnenstrahlung von 0.3 bis 2.5 µm absorbiert werden und entsprechend in Wärme umgesetzt werden.

In üblichen Wandfarben sind allerdings Pigmente eingesetzt die über den sichtbaren Bereich des Sonnenspektrums hinaus auch noch im nahen Infrarotbereich von 0.8 bis 2.5 µm reflektieren und daher, wie die "weiße" Farbe im sichtbaren Bereich einen großen Teil der Sonnenenergie in diesem Wellenlängenbereich zurückreflektieren. Darüberhinaus haben die in den üblichen Farben eingesetzten Pigmente und Bindemittel starke Absorptionsbande im Bereich des thermischen Infrarot, also im Bereich der Wärmestrahlung. Das was aus der solaren Einstrahlung an Wärme gewonnen werden könnte, wird sofort zu 95% als Wärmestrahlung abgegeben.

Diese Wärme steht dem Raum zwar zur Verfügung, aber der Raum ist nur dann warm, wenn die Sonne scheint. Wegen der nur geringen Energieausbeute im nahen Infrarotbereich und insbesondere auch wegen 95 prozentigen, sofortigen Wärmeabstrahlung an der Oberfläche, können keine Energiegewinne für die nächste Nacht gespeichert werden.

Für die außenliegenden Seiten der Hauswände gilt Ähnliches. Wohl mehr aus optischen Gründen werden überwiegend sichtoptisch weiße bis helle Wandfarben eingesetzt. Da die Pigmentierung ähnlich wie bei den Innenfarben ist, haben sie auch im nahen Infrarotspektrum des Sonnenlichtes eine hohe Reflexion. Wie bei den Innenwandfarben ist die Reflexion der Außenwandfarben im thermischen Infrarotbereich, also im Bereich der Wärmestrahlung nur gering.

Durch die starken Absorptionsbande der üblicherweise eingesetzten Bindemittel und Pigmente in diesem Wellenlängenbereich, wird das was aus dem Sonnenlicht in der Wandfarbe in Wärme umgesetzt werden konnte, zu 95% wieder abgestrahlt.

Die vorliegende Erfindung macht es sich zur Aufgabe, die auch im Winter vorhandene direkte und diffuse Sonneneinstrahlung durch einfache Maßnahmen positiv in die Wärmebilanz eines Hauses einzubeziehen, dabei aber ästhetische Gesichtspunkte bei der Farbgestaltung von Hauswänden, wie z.B. helle Farbtöne, in gewohnter Weise zuzulassen.

Diese Aufgabe wird durch die Merkmale des Anspruches 1 gelöst, nämlich einen Anstrichstoff mit reflektierenden Eigenschaften in zwei Wellenlängenbereichen und absorbierenden Eigenschaften in einem weiteren Wellenlängenbereich, dadurch gekennzeichnet, daß

in ein Bindemittel mit einer Transparenz >40% und einem Brechungsindex n <2,0 in einem Wellenlängenbereich von 0,38 bis 0,75 µm (erster Wellenlängenbereich) und in einem Wellenlängenbereich von 5 bis 100 µm (dritter Wellenlängenbereich)

a) plättchenförmige erste Teilchen in einer Menge von 2 bis 30 Gew.-%, bezogen auf das Naßgewicht des Anstrichstoffes, eingebracht sind, deren Dicke <10 µm und deren Fläche (Länge x Breite) >100 µm² ist, und die ein Reflexionsvermögen R im dritten Wellenlängenbereich >40% haben, und die

b) durch zweite Teilchen zumindest teilweise überdeckt sind, die im ersten und dritten Wellenlängenbereich eine Transparenz >40% und in einem Wellenlängenbereich von 0,8 bis 2,5 µm (zweiter Wellenlängenbereich) eine Absorption >20% aufweisen, deren Brechungsindex im ersten Wellenlängenbereich größer als der des Bindemittels ist und deren Größe so gewählt ist, daß sich im ersten Wellenlängenbereich eine optimale reflektive Wirkung einstellt.

Die beanspruchten Austrichstoffe finden Verwendung als Wand-, Dach- und Fassadenfarbe bei Gebäuden und Behältern.

Bevorzugte Ausführungsformen der Erfindung finden sich in den abhängigen Ansprüchen.

Die Erfindung betrifft einen Anstrichstoff, der im sichtbaren Bereich des elektromagnetischen Spektrums von 0.4 bis 0.7 µm reflektierend und im nahen Infrarotbereich von 0.75 bis 2.5 µm absorbierend eingestellt werden kann. Der darüber hinaus im thermischen Infrarotbereich von 3 bis 100 µm, insbesondere von 5 bis 50 µm, also dem Wellenlängenbereich, in dem Oberflächen mit Temperaturen von 0 bis 30° Celsius ihr Strahlungsmaximum haben, eine hohe Reflexion bei geringem Absorptionsgrad hat. Was bedeutet, daß er in diesem Wellenlängenbereich auch eine geringe Wärmeemission hat.

Hierzu werden zur Darstellung von weißen, hellen Anstrichstoffen im sichtbaren Bereich, solche Pigmente ausgewählt, die im sichtbaren Bereich transparent sind und einen größeren Brechungsindex haben, als das Bindemittel, die somit im Sichtbaren eine hohe Rückstreuung bewirken und damit weiß und hell sind.

Im nahen Infrarotbereich von 0.75 bis 2.5 µm absorbieren die ausgewählten Pigmente mehr oder weniger und im Bereich des thermischen Infrarot besonders im Bereich 5 bis 50 µm sind die Pigmente wieder überwiegend transparent, sodaß Wärmestrahlung kaum von Ihnen absorbiert wird. Diese Pigmente werden im folgenden Teil der Beschreibung zur besseren Differenzierung mit den anderen Zuschlagstoffen als zweite Teilchen bezeichnet.

Um eine Reflexion im thermischen Infrarotbereich von 5 bis 50 µm zu erzielen, werden dem Bindemittel plättchenförmige Pigmente zugesetzt, deren Reflexionsvermögen R nach der Formel

$$R = \frac{(n\text{-}1)^2 + k^2}{(n\text{+}1)^2 + k^2}$$

größer 40%, insbesondere größer 60% ist. Dabei ist n der Brechungsindex des Pigmentes und k der Absorptionskoeffizient. Diese Pigmente werden in der weiteren Beschreibung zum besseren Verständnis als erste Teilchen bezeichnet.

Die Reflexion dieser Pigmente ist breitbandig, das heißt sie reflektieren sowohl im sichtbaren, wie auch im nahen Infrarot und im thermischen Infrarotbereich. Allerdings ist nur ihre Reflexion im thermischen Infrarotbereich erwünscht, im sichtbaren Bereich sollen sie möglichst nicht zu sehen sein.

Dies wird einmal durch die direkte Überlagerung der zweiten Teilchen auf dem ersten Teilchen erreicht oder durch die freie Überlagerung im Bindemittel. Darüber hinaus hat es sich als sinnvoll erwiesen, die Plättchengröße der ersten Teilchen möglichst groß zu wählen, da sie dann weniger zur Vergrauung des Farbeindruckes beitragen.

Die gewünschte Absorption des Anstrichstoffes im nahen Infrarotbereich von 0.75 bis 2.5 µm, also jenseits des sichtbaren Wellenlängenbereiches, wird einmal durch die zweiten Teilchen selber verursacht und zum anderen durch weitere Teilchen, die zum Abtönen des Anstrichstoffes dienen.

Die weiteren Teilchen sind so ausgewählt, daß sie im sichtbaren Bereich spektralselektiv sind und nur bei diskreten Farben also z.B. rot, grün oder blau reflektieren, im nahen Infrarotbereich eine hohe Absorption haben und im thermischen Infrarotbereich eine hohe Transparenz aufweisen um die Reflexion der ersten Teilchen in diesem Bereich möglichst wenig zu stören.

Die Wahl des Bindemittels in das die genannten Pigmente dispergiert werden, richtet sich nach der zu behandelnden Oberfläche. Grundsätzlich muß das Bindemittel jedoch im sichtbaren und im thermischen Infrarotbereich eine hohe Transparenz aufweisen, um in diesen Wellenlängenbereichen eine rückstreuende bzw. reflektierende Wirkung des Anstrichstoffes zuzulassen. Im nahen Infrarotbereich ist es von Vorteil, wenn das Bindemittel hier Absorptionsbande hat.

Für Wandoberflächen haben sich Dispersionsbindemittel bewährt, da sie atmungsaktiv sind. Für den erfindungsgemäßen Anstrichstoff sind insbesondere Mischungen von Dispersionen auf Polyethylenbasis auch von Polyethylenoxidaten mit geringen Mengen von Acryldispersionen geeignet.

Für Metalloberflächen wie Metallfensterrahmen innen und außen, aber auch Metallfassaden und Metallkonstruktionen für z.B. Wintergärten, eignen sich eher lösemittelhaltige Bindemittel wie z.B. Zyklokautschuk und hydrierte Kohlenwasserstoffharze, wobei die letzteren vorzugsweise nur im Innenbereich eingesetzt werden.

Eine vorteilhafte Weiterbildung des Erfindungsgedankens ist dadurch gegeben, daß die ersten Teilchen aus der Gruppe der Metalle, wie z.B. Aluminium, Kupfer,Silber, Gold, Nickel, Zink, Eisen, aus Legierungen der Metalle wie z.B. Edelstahl, Messing, Bronze, aus der Gruppe der Halbleiter, wie z.B. Silizium, Germanium, aus der Gruppe der dotierterten Halbleiter, wie z.B. dotiertes Silizium ausgewählt werden.

Eine vorteilhafte Weiterbildung des Erfindungsgedankens ist dadurch gegeben, daß die ersten Teilchen elektrisch leitend sind und mit einer weiteren, elektrisch leitenden, dünnen Schicht zur Erhöhung der chemischen Resistenz und zur Erhöhung des Glanzgrades überzogen sind.

Eine vorteilhafte Weiterbildung des Erfindungsgedankens ist dadurch gegeben, daß die ersten Teilchen elektrisch leitend sind und mit einer elektrisch nicht leitenden, dünnen Schicht zur Farbgebung überzogen sind.

Eine vorteilhafte Weiterbildung des Erfindungsgedankens ist dadurch gegeben, daß die ersten Teilchen aus einem elektrisch nicht leitenden Material wie z.B. Kunststoffplättchen oder Glimmerplättchen bestehen, die mit einer elektrisch leitenden Beschichtung z.B. aus dotierten Zinnoxid, Indiumzinnoxid oder Antimonzinnoxid überzogen sind.

Eine vorteilhafte Weiterbildung des Erfindungsgedankens ist dadurch gegeben, daß die zweiten Teilchen aus der Gruppe der folgenden Materialien ausgewählt sind: Metallsulfide wie z.B. Bleisulfid und Zinksulfid, Metallselenide wie z.B. Zinkselenid, Chloride wie z.B. Natrium- und Kaliumchlorid, Fluoride wie z.B.Calciumfluorid, Lithiumfluorid, Bariumfluorid und Natriumfluorid, Antimonide wie z.B. Indiumantimonid, der Metalloxide wie z.B. Magnesiumoxid, Antimonoxid und Zinkoxid aus Bariumtitanat, aus Bariumferrit, aus reinem Calciumsulfat $CaSO_4$, aus gefälltem Bariumsulfat und aus Mischkristallen von Bariumsulfat mit Zinksulfid wie die Lithopone.

Eine vorteilhafte Weiterbildung des Erfindungsgedankens ist dadurch gegeben, daß die weiteren Teilchen, wenn sie aus der Gruppe der anorganischen Farbpigmente ausgewählt werden, Metalloxide sind, wie z.B. die Eisenoxide,insbesondere die transparenten Eisen- Rot- und Gelboxide wie z.B. die Sicotrans-Formulierungen der BASF, aber auch $\alpha$-Eisenoxide von Bayer, Eisenoxid-Schwarzpigmente wie z.B. Pigmentschwarz 11, Chromoxide wie z.B. Chromoxidgrün, Bleioxide wie z.B. Bleimennige, Molybdänoxide, gemischte Metalloxide und Eisen-Blaupigmente wie z.B. Vossen Blau der Degussa basierend auf mikrokristallinen Fe(II)Fe(III) Zyanidkomplexen sind und wenn sie us der Gruppe der organischen Pigmente ausgewählt werden, Disazopigmente, Indigo-Pigmente insbesondere Thioindigoderivate wie z.B. 7,7' Dichlorthioindigo und Phthalocyanine sind.

Eine vorteilhafte Weiterbildung des Erfindungsgedankens ist dadurch gegeben, daß das Bindemittel ein lösemittelhaltiger Binder, ein Wasserlack oder eine wässrige Dispersion ist und ein Cyclokautschuk, Chlorkautschuk, Butylkautschuk, Kohlenwasserstoffharz, $\alpha$-Methylstyrol-Acrylnitril-Copolymeres, Polyesterimid, Acrylatharz auf der Basis von Acrylsäurebutylester, Polyacrylsäureester, insbesondere Polyacrylbutylsäureester, eine wässrige Dispersion auf Polyethylenbasis, eine wässrige Dispersion auf Polyethylenoxidatbasis, eine wässrige Dispersion auf der Basis von Ethylen-Acrylsäure-Copolymeren, eine wässrige Dispersion auf Methacrylat-basis, auf Acrylat / Styrol-Basis, ein Vinylpyrrolidon-Vinylacetat-Copolymeres, ein ataktisches Polyisopropylacrylat,ein Polyvinylpyrrolidon sein kann, oder aber eine Mischung der genannten Dispersionen und Lacke ist.

Im Folgenden wird der Erfindungsgegenstand anhand von Beispielen und im Rahmen von Versuchen näher erläutert werden.

Die Wirkung des erfindungsgemäßen Anstrichstoffes soll an einer Innenwand, die einem Südfenster gegenüberliegt, demonstriert werden.

Eine Dispersionsmischung bestehend aus:

| | |
|---|---|
| 200 g | Polyethylendispersion mit 40% Festkörperanteil |
| 200 g | Polyethylenoxidat mit 40% Festkörperanteil |
| 20 g | Acryldispersion mit 40% Festkörperanteil |
| 2 g | Entschäumer |
| 30 g | Verdicker |
| 240 g | Wasser |
| 200 g | Zinksulfid |
| 200 g | Zinkoxid |
| 5 g | Chromoxidgrün |
| 80 g | Aluminiumbronze plättchenförmig |

Die Mischung ergab eine lindgrüne, helle Wandfarbe, mit der ein Teil der Wand gestrichen wurde. Nach Abtrocknung der Farbe wurden die Oberflächentemperaturen an der unbehandelten Stelle der Wand und an der gestrichenen nach Sonneneinstrahlung gemessen. Trotz der Wärmeableitung in die Wand, war die Stelle der Wand, die mit der erfindungsgemäßen Farbe gestrichen war 15° Celsius wärmer als die andere.

Der gleiche Versuch wurde mit veränderter Rezeptur wiederholt. Anstelle des Chromoxidgrün wurde ein $\alpha$-Eisenoxidrot von Bayer eingesetzt und anstelle der Aluminiumbronze wurden dotierte Siliziumteilchen eingesetzt. Die Mischung ergab eine helle Farbe mit leichter, roter Tönung. Nach Sonneneinstrahlung konnte eine Temperaturerhöhung gegenüber der unbehandelten Wandstelle von 12° Celsius gemessen werden.

Die gleiche Farbe wurde auf die Innenseite einer Außenwand gestrichen. Nachts konnte mit einer Wärmebildkamera festgestellt werden, daß an dieser Stelle weniger Wärme aus dem Haus nach außen drang.

Bei einem weiteren Versuch an einer südlich weisenden Außenwand des Hauses wurden die als zweite Teilchen eingesetzten Pigmente Zinksulfid und Zinkoxid durch die gleiche Menge Lithopone ersetzt. Der Acrylanteil der Mischung wurde leicht erhöht. Als erstes Teilchen mit Reflexion für den thermischen Infrarotbereich wurde ein Zinkflake mit einer Plättchengröße von ca. 10000 $\mu m^2$ eingesetzt. Die Mischung wurde nicht abgetönt und ergab ein helles, gebrochenes weiß. Die Temperaturerhöhung an der mit der erfindungsgemäßen Farbe gestrichenen Stelle gegenüber der unbehandelten, lag bei 11° Celsius.

Der gleichen Mischung wurden geringe Mengen Calciumsulfat und Bariumferrit zugesetzt. Die Absorption im nahen Infrarotbereich des solaren Spektrums konnte hierdurch deutlich gesteigert werden, obwohl die Farbwirkung im sichtoptischen Bereich fast weiß war.

Nachts konnte mit einer Wärmebildkamera beobachtet werden, daß an den Stellen des Hauses, die mit der erfindungsgemäßen Farbe gestrichen waren, wesentlich weniger Wärme nach außen abgestrahlt wurde, als an den nicht behandelten Stellen.

Der Aluminiumrahmen eines von zwei nach Süden weisenden Fenstern wurde außen mit einem Lack auf Zyklokautschukbasis gestrichen, der neben zweiten Teilchen auf der Basis von Zinkoxid, als weitere Teilchen geringe Mengen eines Eisenoxidschwarz - Pigmentes und als erste Teilchen Edelstahlflakes sowie einen infrarottransparenten Weichmacher enthielt. Die Innenseite des Fensterrahmens wurde mit einem Lack auf der Basis eines hydrierten Kohlenwasserstoffharzes gestrichen.

Als zweite Teilchen wurden Lithopone eingesetzt, als erste Teilchen silberüberzogene Nickelflakes und zur Abtönung der Farbe wurden als weitere Teilchen transparente Eisenoxide eingesetzt.

Tagsüber konnten überwiegend aus dem nahen Infrarotbereich des solaren Spektrums Energiegewinne nach innen geleitet werden. Nachts konnte mit einer Wärmebildkamera beobachtet werden, daß der mit den erfindungsgemäßen Anstrichstoffen behandelte Fensterrahmen weniger Wärme nach außen abstrahlte als der unbehandelte.

## Weiterer Stand der Technik

In der US 4,916,014 ist ein Coating beschrieben, das reflektierende Eigenschaften in zwei Wellenlängenbereichen hat. Nachteilig ist jedoch, bezogen auf die Aufgabenstellung der hier vorgelegten Erfindung, daß neben einer hohen Reflexion im Bereich des sichtbaren Lichtes auch im nahen Infrarotbereich des solaren Spektrums reflektiert werden soll, um eine Aufheizung des damit gestrichenen Gebäudes zu verhindern.

In der Auslegeschrift DE 1 227 594 ist ein infrarotreflektierender, feuerfester Schutz überzug beschrieben, der zumindest im Wellenlängenbereich des nahen Infrarot stark reflektierend ist. Nachteilig ist jedoch, bezogen auf die Aufgabenstellung der hier vorgelegten Erfindung, daß der Überzug im nahen Infrarotbereich reflektierend ist, im thermischen Infrarotbereich oberhalb der Wellenlänge von 10 $\mu m$ aufgrund der gewählten Materialien aber absorbierend und damit emittierend wirkt.

## Patentansprüche

**1.** Anstrichstoff mit reflektierenden Eigenschaften in zwei Wellenlängenbereichen und absorbierenden Eigenschaften in einem weiteren Wellenlängenbereich, dadurch gekennzeichnet, daß

in ein Bindemittel mit einer Transparenz >40% und einem Brechungsindex n <2,0 in einem Wellenlängenbereich von 0,38 bis 0,75 $\mu m$ (erster Wellenlängenbereich) und in einem Wellenlängenbereich von 5 bis 100 $\mu m$ (dritter Wellenlängenbereich)

a) plättchenförmige erste Teilchen in einer Menge von 2 bis 30 Gew.-%, bezogen auf das Naßgewicht des Anstrichstoffes, eingebracht sind, deren Dicke <10 $\mu m$ und deren Fläche (Länge x Breite) >100 $\mu m^2$ ist, und die ein Reflexionsvermögen R im dritten Wellenlängenbereich >40% haben, und die

b) durch zweite Teilchen zumindest teilweise überdeckt sind, die im ersten und dritten Wellenlängenbereich eine Transparenz >40% und in einem Wellenlängenbereich von 0,8 bis 2,5 $\mu m$ (zweiter Wellenlängenbereich) eine Absorption >20% aufweisen, deren Brechungsindex im ersten Wellenlängenbereich größer als der des Bindemittels ist und deren Größe so gewählt ist, daß sich im ersten Wellenlängenbereich eine optimale reflektive Wirkung einstellt.

**2.** Anstrichstoff gemäß Anspruch 1, dadurch gekennzeichnet, daß der erste Wellenlängenbereich von 0,4 bis 0,7 $\mu m$ reicht.

**3.** Anstrichstoff gemäß Anspruch 1 oder 2, dadurch gekennzeichnet, daß der zweite Wellenlängenbereich von 1,0

bis 2,0 μm reicht.

4. Anstrichstoff gemäß einem der Ansprüche 1 bis 3, dadurch gekennzeichnet, daß der dritte Wellenlängenbereich von 10 bis 50 μm reicht.

5. Anstrichstoff gemäß einem der vorhergehenden Ansprüche, dadurch gekennzeichnet, daß das Bindemittel im ersten und dritten Wellenlängenbereich eine Transparenz >60% aufweist.

6. Anstrichstoff gemäß einem der vorhergehenden Ansprüche, dadurch gekennzeichnet, daß der Brechungsindex n des Bindemittels im ersten und dritten Wellenlängenbereich <1,7 ist.

7. Anstrichstoff gemäß Anspruch 6, dadurch gekennzeichnet, daß der Brechungsindex n des Bindemittels im ersten und dritten Wellenlängenbereich bei 1,5 ist.

8. Anstrichstoff gemäß einem der vorhergehenden Ansprüche, dadurch gekennzeichnet, daß die Dicke der ersten Teilchen <5 μm ist.

9. Anstrichstoff gemäß einem der vorhergehenden Ansprüche, dadurch gekennzeichnet, daß die Fläche der ersten Teilchen >2500 μm$^2$ ist.

10. Anstrichstoff gemäß Anspruch 9, dadurch gekennzeichnet, daß die Fläche der ersten Teilchen >10000 μm$^2$ ist.

11. Anstrichstoff gemäß einem der vorhergehenden Ansprüche, dadurch gekennzeichnet, daß das Reflexionsvermögen R der ersten Teilchen im dritten Wellenlängenbereich >60% ist.

12. Anstrichstoff gemäß einem der vorhergehenden Ansprüche, dadurch gekennzeichnet, daß die zweiten Teilchen eine Transparenz im ersten und dritten Wellenlängenbereich >60% aufweisen.

13. Anstrichstoff gemäß einem der vorhergehenden Ansprüche, dadurch gekennzeichnet, daß die zweiten Teilchen eine Absorption im zweiten Wellenlängenbereich >40% aufweisen.

14. Anstrichstoff gemäß einem der vorhergehenden Ansprüche, dadurch gekennzeichnet, daß die zweiten Teilchen direkt in das Bindemittel eingebracht sind.

15. Anstrichstoff gemäß einem der Ansprüche 1 bis 13, dadurch gekennzeichnet, daß die zweiten Teilchen auf den ersten Teilchen aufgebracht sind.

16. Anstrichstoff gemäß einem der vorhergehenden Ansprüche, dadurch gekennzeichnet, daß zusätzlich weitere Teilchen in das Bindemittel eingebracht sind, die im dritten Wellenlängenbereich eine Transparenz >40% aufweisen, die im ersten Wellenlängenbereich selektiv reflektierend sind, und die im zweiten Wellenlängenbereich eine Absorption >20% aufweisen.

17. Anstrichstoff gemäß Anspruch 16, dadurch gekennzeichnet, daß die weiteren Teilchen im dritten Wellenlängenbereich eine Transparenz >60% aufweisen.

18. Anstrichstoff gemäß Anspruch 16 oder 17, dadurch gekennzeichnet, daß die weiteren Teilchen im zweiten Wellenlängenbereich eine Absorption >40% aufweisen.

19. Anstrichstoff gemäß einem der Ansprüche 16 bis 18, dadurch gekennzeichnet, daß die weiteren Teilchen, wenn sie

a) aus der Gruppe der anorganischen Farbpigmente ausgewählt sind, Metalloxide, gemischte Metalloxide oder Eisen-Blaupigmente sind, und wenn sie
b) aus der Gruppe der organischen Pigmente ausgewählt sind, Diazopigmente, Indigopigmente, Thioindigopigmente oder Phthalocyanine sind.

20. Anstrichstoff gemäß einem der vorhergehenden Ansprüche, dadurch gekennzeichnet, daß die ersten Teilchen ausgewählt sind aus Metallen, Metallegierungen, Halbleitern und dotierten Halbleitern.

**21.** Anstrichstoff gemäß einem der vorhergehenden Ansprüche, dadurch gekennzeichnet, daß die ersten Teilchen elektrisch leitend sind und mit einer elektrisch leitenden, dünnen Schicht zur Erhöhung der chemischen Beständigkeit und des Glanzgrades überzogen sind.

**22.** Anstrichstoff gemäß einem der Ansprüche 1 bis 20, dadurch gekennzeichnet, daß die ersten Teilchen leitend sind und mit einer nicht leitenden, dünnen Schicht zur Farbgebung überzogen sind.

**23.** Anstrichstoff gemäß einem der Ansprüche 1 bis 19, dadurch gekennzeichnet, daß die ersten Teilchen aus einem elektrisch nicht leitenden Material bestehen und mit einer elektrisch leitenden Schicht überzogen sind.

**24.** Anstrichstoff gemäß einem der vorhergehenden Ansprüche, dadurch gekennzeichnet, daß die zweiten Teilchen ausgewählt sind aus Metallsulfiden, Metallseleniden, Chloriden, Fluoriden, Antimoniden, Metalloxiden, Bariumtitanat, Bariumferrit, reinem Calciumsulfat $CaSO_4$, gefälltem Bariumsulfat und Mischkristallen aus Bariumsulfat mit Zinksulfid.

**25.** Anstrichstoff gemäß einem der vorhergehenden Ansprüche, dadurch gekennzeichnet, daß das Bindemittel ein Wasserlack oder eine wäßrige Dispersion ist und ein Cyclokautschuk, Chlorkautschuk, Butylkautschuk, Kohlenwasserstoffharz, $\alpha$-Methylstyrol-Acrylnitril-Copolymer, Polyesterimid, Acrylatharz auf Acrylsäurebutylesterbasis, Polyacrylsäureester, eine wäßrige Dispersion auf Polyethylenoxidbasis, eine wäßrige Dispersion auf Basis von Ethylen-Acrylsäure-Copolymer, eine wäßrige Dispersion auf Methacrylat- oder Acrylat/Styrol-Basis, ein Vinylpyrrolidon-Vinylacetat-Copolymer, ein ataktisches Polyisopropylacrylat, ein Polyvinylpyrrolidon oder eine Mischung dieser Dispersionen und Lacke ist.

**26.** Verwendung eines Anstrichstoffes gemäß einem der vorhergehenden Ansprüche als Wand-, Dach- oder Fassadenfarbe für Gebäude oder Behälter.

**Claims**

**1.** Paint having reflecting properties in two wavelength ranges and absorbing properties in a further wavelength range, characterised in that into a binder having a transparency >40% and a refractive index n <2.0 in a wavelength range from 0.38 to 0.75 pm (first wavelength range) and in a wavelength range from 5 to 100 µm (third wavelength range)

　　a) platelet-like first particles are introduced in a quantity of 2 to 30 wt.%, based on the wet weight of the paint, the thickness of which is <10 µm and the surface area (length x width) of which is >100 µm$^2$, and which have a reflecting power R in the third wavelength range >40%, and which
　　b) are covered at least partly by second particles, which in the first and third wavelength range have a transparency >40% and in a wavelength range from 0.8 to 2.5 µm (second wavelength range) an absorption >20%, the refractive index of which in the first wavelength range is greater than that of the binder and the size of which is selected so that an optimum reflective effect is adjusted in the first wavelength range.

**2.** Paint according to claim 1, characterised in that the first wavelength range extends from 0.4 to 0.7 µm.

**3.** Paint according to claim 1 or 2, characterised in that the second wavelength range extends from 1.0 to 2.0 µm.

**4.** Paint according to one of claims 1 to 3, characterised in that the third wavelength range extends from 10 to 50 µm.

**5.** Paint according to one of the preceding claims, characterised in that the binder has a transparency >60% in the first and third wavelength range.

**6.** Paint according to one of the preceding claims, characterised in that the refractive index n of the binder is <1.7 in the first and third wavelength range.

**7.** Paint according to claim 6, characterised in that the refractive index n of the binder is 1.5 in the first and third wavelength range.

**8.** Paint according to one of the preceding claims, characterised in that the thickness of the first particles is <5 µm.

7

9. Paint according to one of the preceding claims, characterised in that the surface area of the first particles is >2,500 $\mu m^2$.

10. Paint according to claim 9, characterised in that the surface area of the first particles is >10,000 $\mu m^2$.

11. Paint according to one of the preceding claims, characterised in that the reflecting power R of the first particles is >60% in the third wavelength range.

12. Paint according to one of the preceding claims, characterised in that the second particles have a transparency >60% in the first and third wavelength range.

13. Paint according to one of the preceding claims, characterised in that the second particles have an absorption >40% in the second wavelength range.

14. Paint according to one of the preceding claims, characterised in that the second particles are introduced directly into the binder.

15. Paint according to one of claims 1 to 13, characterised in that the second particles are applied to the first particles.

16. Paint according to one of the preceding claims, characterised in that additionally further particles are introduced into the binder, which have a transparency >40% in the third wavelength range, which are selectively reflecting in the first wavelength range, and which have an absorption >20% in the second wavelength range.

17. Paint according to claim 16, characterised in that the further particles have a transparency >60% in the third wavelength range.

18. Paint according to claim 16 or 17, characterised in that the further particles have an absorption >40% in the second wavelength range.

19. Paint according to one of claims 16 to 18, characterised in that the further particles, if they are selected

a) from the group of inorganic coloured pigments, are metal oxides, mixed metal oxides or iron blue pigments, and if they are selected
b) from the group of organic pigments, are diazo pigments, indigo pigments, thioindigo pigments or phthalocyanines.

20. Paint according to one of the preceding claims, characterised in that the first particles are selected from metals, metal alloys, semiconductors and doped semiconductors.

21. Paint according to one of the preceding claims, characterised in that the first particles are electrically conductive and are coated with an electrically conductive, thin layer to increase the chemical resistance and the degree of gloss.

22. Paint according to one of claims 1 to 20, characterised in that the first particles are conductive and are coated with a non-conductive, thin layer for colouring.

23. Paint according to one of claims 1 to 19, characterised in that the first particles consist of an electrically non-conductive material and are coated with an electrically conductive layer.

24. Paint according to one of the preceding claims, characterised in that the second particles are selected from metal sulphides, metal selenides, chlorides, fluorides, antimonides, metal oxides, barium titanate, barium ferrite, pure calcium sulphate $CaSO_4$, precipitated barium sulphate and mixed crystals of barium sulphate with zinc sulphide.

25. Paint according to one of the preceding claims, characterised in that the binder is a water lacquer or an aqueous dispersion and a cyclised rubber, chlorine rubber, butyl rubber, hydrocarbon resin, $\alpha$-methylstyrene-acrylonitrile copolymer, polyester imide, acrylate resin based on acrylic butylate, polyacrylate, an aqueous dispersion based on polyethylene oxide, an aqueous dispersion based on ethylene-acrylic acid copolymer, an aqueous dispersion based on methacrylate/styrene or acrylate/styrene, a vinylpyrrolidone-vinyl acetate copolymer, an atactic polyisopropyl acrylate, a polyvinylpyrrolidone or a mixture of these dispersions and lacquers.

26. Use of a paint according to one of the preceding claims as wall, roof or facade colour for buildings or containers.

**Revendications**

1. Peinture ayant des propriétés réfléchissantes dans deux plages de longueurs d'onde et des propriétés absorbantes dans une plage de longueurs d'onde supplémentaire, caractérisée en ce que
   dans un liant ayant une transparence >40 % et un indice de réfraction n < 2,0 dans une plage de longueurs d'onde allant de 0,38 à 0,75 μm (première plage de longueurs d'onde) et dans une plage de longueurs d'onde de 5 à 100 μm (troisième plage de longueurs d'onde),

   a) des premières particules en forme de plaquettes sont introduites, en une quantité de 2 à 30 % en poids, en se référant au poids à l'état humide de la peinture, dont l'épaisseur < 10 μm et dont l'aire de la surface (longueur x largeur) > 100 μm$^2$, et ayant un pouvoir réfléchissant R > 40 %, dans la troisième plage de longueurs d'onde, et
   b) sont recouvertes au moins partiellement par des deuxièmes particules qui présentent une transparence > 40 %, dans la première et la troisième plage de longueurs d'onde, et une absorption > 20 % dans une plage de longueurs d'onde de 0,8 à 2,5 μm (deuxième plage de longueurs d'onde), dont l'indice de réfraction dans la première plage de longueurs d'onde est supérieur à celui du liant et dont la taille est choisie telle qu'un effet réfléchissant optimal s'établisse dans la première plage de longueurs d'onde.

2. Peinture selon la revendication 1, caractérisée en ce que la première plage de longueurs d'onde va de 0,4 à 0,7 μm.

3. Peinture selon la revendication 1 ou 2, caractérisée en ce que la deuxième plage de longueurs d'onde va de 1,0 à 2,0 μm.

4. Peinture selon l'une des revendications 1 à 3, caractérisée en ce que la troisième plage de longueurs d'onde va de 10 à 50 μm.

5. Peinture selon l'une des revendications précédentes, caractérisée en ce que le liant présente une transparence > 60 % dans la première et dans la troisième plage de longueurs d'onde.

6. Peinture selon l'une des revendications précédentes, caractérisée en ce que l'indice de réfraction n du liant, dans la première et dans la troisième plage de longueurs d'onde, est < 1,7.

7. Peinture selon la revendication 6, caractérisée en ce que l'indice de réfraction n du liant, dans la première et dans la troisième plage de longueurs d'onde, est d'environ 1,5.

8. Peinture selon l'une des revendications précédentes, caractérisée en ce que l'épaisseur des premières particules est < 5 μm.

9. Peinture selon l'une des revendications précédentes, caractérisée en ce que l'aire des premières particules est > 2500 μm$^2$.

10. Peinture selon la revendication 9, caractérisée en ce que l'aire des premières particules est > 10000 μm$^2$.

11. Peinture selon l'une des revendications précédentes, caractérisée en ce que le pouvoir réfléchissant R des premières particules, dans la troisième plage de longueurs d'onde, est > 60 %.

12. Peinture selon l'une des revendications précédentes, caractérisée en ce que les deuxièmes particules ont une transparence, dans la première et dans la troisième plage de longueurs d'onde, > 60 %.

13. Peinture selon l'une des revendications précédentes, caractérisée en ce que les deuxièmes particules ont une absorption > 40 % dans la deuxième plage de longueurs d'onde.

14. Peinture selon l'une des revendications précédentes, caractérisée en ce que les deuxièmes particules sont introduites directement dans le liant.

**15.** Peinture selon l'une des revendications 1 à 13, caractérisée en ce que les deuxièmes particules sont appliquées sur les premières particules.

**16.** Peinture selon l'une des revendications précédentes, caractérisée en ce que, en plus, sont introduites dans le liant d'autres particules présentant une transparence > 40% dans la troisième plage de longueurs d'onde, en étant réfléchissantes de façon sélective dans la première plage de longueurs d'onde et présentant une absorption > 20 % dans la deuxième plage de longueurs d'onde.

**17.** Peinture selon la revendication 16, caractérisée en ce que les autres particules présentent une transparence > 60 % dans la troisième plage de longueurs d'onde.

**18.** Peinture selon la revendication 16 ou 17, caractérisée en ce que les autres particules présentent une absorption > 40 % dans la deuxième plage de longueurs d'onde.

**19.** Peinture selon l'une des revendications 16 à 18, caractérisée en ce que les autres particules, lorsqu'elles

    a) sont sélectionnées dans le groupe des pigments colorants non organiques, sont des oxydes métalliques, des oxydes métalliques mélangés ou des pigments bleus de fer, et lorsqu'elles
    b) sont sélectionnées dans le groupe des pigments organiques, sont des pigments diazo, des pigments indigo, des pigments thioindigo ou des phthalocyanines.

**20.** Peinture selon l'une des revendications précédentes, caractérisée en ce que les premières particules sont sélectionnées parmi les métaux, les alliages métalliques, les semi-conducteurs et les semi-conducteurs dopés.

**21.** Peinture selon l'une des revendications précédentes, caractérisée en ce que les premières particules sont conductrices de l'électricité et sont revêtues d'une couche mince conductrice de l'électricité, afin d'augmenter la résistance chimique et le degré de brillance.

**22.** Peinture selon l'une des revendications 1 à 20, caractérisée en ce que les premières particules sont conductrices et sont revêtues d'une couche mince, non conductrice, destinée à leur donner une coloration.

**23.** Peinture selon l'une des revendications 1 à 19, caractérisée en ce que les premières particules sont constituées d'un matériau non conducteur de l'électricité et sont revêtues d'une couche conductrice de l'électricité.

**24.** Peinture selon l'une des revendications précédentes, caractérisée en ce que les deuxièmes particules sont sélectionnées parmi les sulfures métalliques, sélénures métalliques, chlorures, fluorures, antimoniures, oxydes métalliques, titanate de baryum, ferrite de baryum, sulfate de calcium pur $CaSO_4$, sulfate de baryum précipité et cristaux mélangés constitués de sulfate de baryum avec du sulfure de zinc.

**25.** Peinture selon l'une des revendications précédentes, caractérisée en ce que le liant est un vernis à l'eau ou bien une dispersion aqueuse et un caoutchouc cyclo, un caoutchouc chloro, un caoutchouc butyle, une résine d'hydrocarbure, un copolymère a-méthylstyrène-acrylnitril, un polyesterimide, une résine acrylate à base de butylester d'acide acrylique, un ester d'acide polyacrylique, une dispersion aqueuse à base d'oxyde de polyéthylène, une dispersion aqueuse à base de copolymère éthylène-acide acrylique, une dispersion aqueuse à base de méthacrylate ou acrylate/styrène, un copolymère vinylpyrrolidon-acétate de vinyle, un polyisopropylacrylate atactique, un polyvinylpyrrolidon ou un mélange de ces dispersions et vernis.

**26.** Utilisation d'une peinture selon l'une des revendications précédentes, comme peinture pour parois et murs, toits ou façades, pour des bâtiments ou des récipients.